# FASCICULE DE BREVET EUROPEEN

(11) **EP 4 090 635 B1**
(45) Date de publication et mention de la délivrance du brevet: **13.11.2024**
(21) Numéro de dépôt: 21719690.6
(22) Date de dépôt: 14.01.2021
(51) Int. Cl.: C03C 1/00, C03B 3/00, C03B 5/235

(54) **FUSION DE MATIÈRE VITRIFIABLE AVEC UN COMBUSTIBLE DU TYPE BIOMASSE**
SCHMELZEN VON VITRIFIZIERBAREM MATERIAL MIT EINEM BRENNSTOFF VOM BIOMASSETYP
MELTING VITRIFIABLE MATERIAL WITH A BIOMASS-TYPE FUEL

(30) Priorité: 15.01.2020 FR 2000360
(43) Date de publication de la demande: 23.11.2022
(73) Titulaire: SAINT-GOBAIN ISOVER, 92400 Courbevoie (FR)
(72) Inventeur: GUILLET, Antoine, 75019 PARIS (FR); VLAD, Alexandru, 10041 PLOIESTI - PRAHOVA (RO)
(74) Mandataire: Saint-Gobain Recherche
(86) Numéro de dépôt international: PCT/FR2021/050061
(87) Numéro de publication internationale: WO 2021/144536

(56) Documents cités:
- EP-A1- 2 918 555
- WO-A1-02/48612
- FR-A1- 2 987 617
- US-A1- 2018 362 380

## Description

L'invention concerne le domaine de la fusion d'une matière vitrifiable comme le verre ou la roche ou un silicate, notamment dans le cadre de la fabrication de laine minérale.

La fusion d'une matière vitrifiable comprend l'introduction dans un four de matière première vitrifiable et le chauffage de cette matière première dans le four jusqu'à sa fusion. Les températures élevées mises en œuvre (généralement supérieures à 1300°C) mettent à rude épreuve le four et ses accessoires, dont on cherche à prolonger autant que possible la durée de vie. Cet objectif est plus facile à atteindre si la température de la matière en cours de fusion est bien homogène dans le four. En effet, une température homogène de la masse en fusion permet de minimiser les températures nécessaires à la fusion de l'essentiel des particules solides sans création de zones trop chaudes générant de l'usure du four et de ses accessoires.

Dans le cadre de l'invention, le chauffage dans le four est réalisé par combustion de combustible, de la biomasse jouant le rôle de combustible. Il n'est pas exclu que la biomasse joue également le rôle de matière première influençant la composition de la matière vitrifiable fabriquée puisque son taux de cendre n'est généralement pas nul. Une biomasse est une matière organique d'origine végétale, animale, bactérienne ou fongique, utilisable comme source d'énergie.

La combustion du combustible est obtenue grâce à la présence d'un comburant comprenant de l'oxygène comme l'air ou l'air enrichi en oxygène ou l'oxygène pur (c'est-à-dire comprenant plus de 90% voire plus de 99% d'oxygène). La biomasse n'est généralement pas le seul combustible utilisé, du combustible du type hydrocarbure gazeux ou liquide, dit combustible hydrocarboné, étant également utilisé. Le combustible hydrocarboné et le comburant peuvent être introduits séparément dans le four ou être mélangés dans une chambre de mélange de brûleur avant introduction dans le four. Le comburant et le combustible peuvent être introduits au-dessus de la surface de la matière en cours de fusion ou en-dessous de la surface de la matière en cours de fusion. Le four peut comprendre des parois refroidies par un courant d'eau. Le four peut notamment être un four à combustion immergée. Ce four peut notamment comprendre des parois métalliques refroidies par une circulation d'eau (four appelé « water jacket » par l'homme du métier) et comprendre une ou deux cuves successive comme décrit dans WO2013186480. Pour la combustion du combustible hydrocarboné, le four peut être équipé de brûleurs immergés, notamment de brûleurs comprenant chacun une pluralité d'injecteurs en ligne comme décrit dans WO2013117851.

WO 02/48612 A1, EP 2 918 555 A1, US 2018/362380 A1 et FR 2 987 617 A1 décrivent l'utilisation de biomasse dans des mélanges comportant également des matières premières vitrifiables.

L'invention concerne un procédé de fusion de matière minérale vitrifiable telle que le verre ou la roche ou un silicate, comprenant l'introduction d'un mélange préconstitué de matière première vitrifiable et de biomasse dans un four à combustion de combustible, puis le chauffage dudit mélange menant à la fusion de la matière vitrifiable. Selon l'invention, la biomasse comprend des graines oléagineuses et/ou enveloppes de graines oléagineuses, dite biomasse oléagineuse. De plus la biomasse représente 1 à 50 % en poids et de préférence 10 à 40% en poids de la masse du mélange. Le mélange de matière première et de biomasse est préconstitué, ce qui signifie qu'il est préparé préalablement à son introduction dans le four, et non pas constitué in situ dans le four par introduction séparée. Il n'est bien entendu pas exclu d'introduire aussi de façon séparée de la matière première et/ou de la biomasse.

On s'est aperçu de plusieurs effets bénéfiques découlant de l'introduction de la biomasse :
- la température dans le four est beaucoup plus homogène ; cela tient sans doute au fait que la biomasse se répartit dans le four uniformément, au même titre que la matière première, et elle joue ainsi son rôle de combustible en toute zone du four ; la combustion n'est alors pas limitée aux seuls brûleurs qui ont habituellement tendance à former des zones très chaudes; on peut donc réduire la puissance des brûleurs pour la remplacer en partie par de la puissance provenant de la combustion de la biomasse, cette puissance étant diffusée partout dans le four ; grâce à cela, l'utilisation de la biomasse apporte une grande stabilité en température et en tirée ;
- la présence de la biomasse dans le mélange préconstitué prévient la formation prématurée d'agglomérats sous l'effet de la chaleur lorsque le mélange s'approche du point d'introduction dans le four; en effet, ce type d'agglomérat peut former un véritable bouchon obstruant le canal d'introduction de la matière première, ce qui provoque alors une interruption de la production; ce type d'agglomérat semble être un mélange de matière fondue et non fondue, et se forme un peu comme un frittage ; la présence de la biomasse perturbe la formation des agglomérats, peut-être sous l'effet de la décomposition de la biomasse avec formation de gaz, et la matière première peut alors se répartir dès son introduction dans le four de façon rapide et très homogène,

Avantageusement, le mélange préconstitué est introduit dans le four sous la surface des matières en cours de fusion. Ainsi, la matière (matière première ou biomasse) la plus volatile est piégée dans la masse en fusion et ne peut s'échapper via les fumées de combustion. Un four à combustion immergée procure un brassage très efficace de toutes les matières contenues dans le four. Le mélange préconstitué introduit sous la surface des matières en fusion est immédiatement mélangé avec tout ce que contient le four et diffusé partout dans le four.

Le mélange préconstitué est introduit dans le four par écoulement ou poussée, comme par usage d'une vis-sans-fin ou d'un piston. Dans le cas de l'introduction sous la surface des matières en fusion, un bouchon se forme à l'approche du point d'introduction dans le four. Ce bouchon est un mélange de masse de matière minérale (verre ou roche ou silicate) figée provenant du four, mélangé avec de la matière première entrante. Ce bouchon se forme à un endroit où la température varie fortement entre l'intérieur chaud du four et l'extérieur froid du four. Ce gradient de température est encore plus fort dans le cas d'un four du type « water jacket ». La formation de ce bouchon est bénéfique car cela empêche la masse en fusion dans le four de s'en s'échapper pour pénétrer dans le fourreau contenant la vis-sans-fin. Cependant, si ce bouchon est trop consistant, il risque de fortement freiner voire bloquer la vis, et l'application d'un trop fort couple d'entraînement à la vis pour la faire tourner malgré tout, peut conduire à sa rupture. La présence de la biomasse en mélange avec la matière première réduit la consistance du bouchon. L'invention est particulièrement adaptée à la fusion d'une matière minérale dans un four à combustion immergée comprenant des parois refroidies par un courant d'eau, la matière première vitrifiable étant introduite dans le four en mélange avec de la biomasse, sous la surface des matières en cours de fusion.

L'invention concerne également un mélange de biomasse et de matière première vitrifiable pour introduire dans un four de fusion d'une matière minérale vitrifiable, notamment de verre ou de roche ou de silicate. Ce mélange est constitué avant son introduction dans le four. Dans ce mélange la biomasse représente 1 à 50 % en poids et de préférence 10 à 40% en poids de la masse du mélange.

La biomasse peut être une plante telle que le miscanthus ou une algue. Selon l'invention la biomasse comprend des graines oléagineuses et/ou enveloppes de graines oléagineuses, dite biomasse oléagineuse. Les oléagineux sont des plantes cultivées pour leurs graines ou leurs fruits riches en matières grasses, dont on extrait l'huile pour un usage alimentaire, énergétique ou industriel. La biomasse oléagineuse est notamment de la graine ou enveloppe d'au moins une espèce végétale suivante : tournesol, colza, soja, palme, arachide, olive, courge, notamment de la cosse de tournesol. Le terme « enveloppe » (seed husk en anglais) désigne ce qui entoure et protège la graine elle-même et peut selon les espèces végétales être une cosse, coque, peau, etc. On attribue l'excellent comportement de la biomasse oléagineuse au fait qu'elle soit graisseuse. Elle agit comme un véritable lubrifiant, non seulement pour une vis-sans-fin, mais aussi pour tout le système mécanique convoyant le mélange jusqu'au four. La présence de la biomasse agit donc comme prévention de l'endommagement de l'équipement de dosage et de transport de la matière première vitrifiable. L'invention concerne également l'utilisation d'une biomasse oléagineuse en addition avec de la matière première vitrifiable dans le but de réduire l'endommagement de l'équipement de dosage et de transport de ladite matière première vitrifiable. Une biomasse oléagineuse particulièrement efficace est la cosse de tournesol, laquelle est de plus un déchet peu onéreux de l'industrie agro-alimentaire. L'utilisation de ce sous-produit est ainsi particulièrement avantageuse et même écologique car il s'agit d'un combustible non-fossile dont on ne sait que faire, car non comestible (ni pour l'alimentation humaine ni pour l'alimentation animale) et ne nécessitant aucune culture spécifique prenant la place d'une autre pour l'alimentation humaine. La biomasse oléagineuse peut représenter plus de 50% et de préférence plus de 80% et de préférence plus de 90%, voire 100% en poids de la biomasse.

Afin de de mettre en évidence l'effet bénéfique de l'introduction d'une biomasse oléagineuse sur la durée de vie d'une enfourneuse, deux séries de tests sont réalisées sur un four pilote à brûleur immergé. Selon une première série dite « sans biomasse », une composition de matières vitrifiables ne contenant pas de biomasse est introduite dans le four. Selon une deuxième série dite « avec biomasse », une biomasse de type oléagineuse, constituée de coquilles de graines de tournesol, est introduite dans la composition de matières vitrifiables, selon une proportion de 100 kg de biomasse, pour 1300 kg de matières vitrifiables, soit environ 7,7% massique. Les autres paramètres procédés (température du bain de verre, débit massique d'enfournement...) restent inchangés entre les deux séries. Pour chaque essai, les durées de vie respectives de la vis d'enfournement et du fourreau sont notées. Les valeurs moyennes de ces durées de vie sont reprises dans le Tableau 1 ci-dessous.

**[Tableaux 1]**

| | Moyenne de durée de la vis (en jours) | Moyenne de durée du fourreau (en jours) |
|---|---|---|
| Sans Biomasse | 23,25 | 37,7 |
| Avec Biomasse | 157 | 84 |
| Augmentation en % | 575% | 123% |

Valeurs moyennes de durée de vie de vis et fourreau d'enfourneuses en fonction des compositions de matières vitrifiables enfournées

Les résultats du Tableau 1 montrent que l'introduction d'une biomasse oléagineuse de coquilles de graines de tournesol, même selon une proportion relativement faible de 7,7% en poids, permet d'accroître significativement la durée de vie de l'enfourneuse, en induisant une augmentation moyenne de 575% de la durée de vie de la vis d'enfournement, et de 123% de la durée de vie du fourreau.

La biomasse est un combustible au même titre que le combustible hydrocarboné amené aux brûleurs. La quantité de comburant introduite dans le four, généralement par les brûleurs, est adaptée pour brûler tout le combustible introduit dans le four. On amène donc aux brûleurs plus de comburant nécessaire pour brûler le combustible hydrocarboné amené aux brûleurs, l'excès de comburant servant à brûler la biomasse amenée hors des brûleurs.

La biomasse peut apporter 5 à 80% du pouvoir calorifique inférieur du combustible total utilisé pour chauffer le four.

La matière en fusion dans le four a généralement une température comprise entre 1200°C et 1700°C.

La matière vitrifiable fabriquée par le procédé selon l'invention est une matière minérale, généralement du type oxyde, comprenant généralement au moins 30% en masse de silice, telle qu'un verre ou une roche ou un silicate comme un silicate d'alcalin et/ou d'alcalino-terreux.

Un verre ou une roche comprend généralement :
SiO₂ : 30 à 75% en poids,
CaO+MgO : 5 à 40% en poids,
Na₂O+K₂O : 0 à 20% en poids,
Al₂O₃ : 0 à 30% en poids,
Oxyde de fer : 0 à 15% en poids.

Si un verre est visé alors la composition de la matière vitrifiable fabriquée comprend généralement :
SiO₂ : 50 à 75% en poids,
CaO+MgO : 5 à 20% en poids,
Na₂O+K₂O : 12 à 20% en poids,
Al₂O₃ : 0 à 8% en poids,
Oxyde de fer : 0 à 3% en poids,
B₂O₃ : 2 à 10% en poids.

Si une roche (également appelé « verre noir » par l'homme du métier) est visée alors la composition de la matière vitrifiable fabriquée comprend généralement :
SiO₂ : 30 à 50% en poids,
CaO+MgO : 20 à 40% en poids,
Al₂O₃ : 10 à 26%) en poids,
Oxyde de fer : 3 à 15% en poids.

On introduit dans le four un mélange préconstitué de biomasse et de matière première vitrifiable. La matière première vitrifiable introduite dans le four contient les composés permettant l'obtention de la composition minérale visée (verre ou roche ou silicate), ces composés pouvant être ceux utilisés habituellement par l'homme du métier, comme du sable (source de silice), un oxyde ou hydroxyde ou carbonate d'alcalin, un oxyde ou hydroxyde ou carbonate d'alcalino-terreux, du feldspath (source d'alumine), etc. La matière première vitrifiable comprend généralement de la silice et au moins un des composés suivant : oxyde ou hydroxyde ou carbonate d'alcalin, oxyde ou hydroxyde ou carbonate d'alcalino-terreux. La matière première peut également comprendre du calcin. La matière première est généralement un mélange de poudre, ou un mélange de poudre et de morceaux de calcin. L'expression « la matière première » est donc une expression générique désignant généralement un mélange comprenant différents composés pulvérulents. Cette « matière première » est vitrifiable, sa fusion menant à une matière minérale du type verre ou roche ou silicate.

La matière minérale vitrifiable fondu fabriquée selon l'invention est extraite du four pour être solidifiée par refroidissement sous une forme appropriée. Notamment, elle peut être extraite du four à l'état fondu pour être directement utilisée dans un dispositif de fibrage pour former du fil de renforcement ou de la laine minérale. Ainsi, la matière minérale vitrifiable peut être extraite du four et transformée en fibre dans un dispositif de fibrage. Dans l'application fibrage, la matière vitrifiable est généralement du verre ou de la roche.

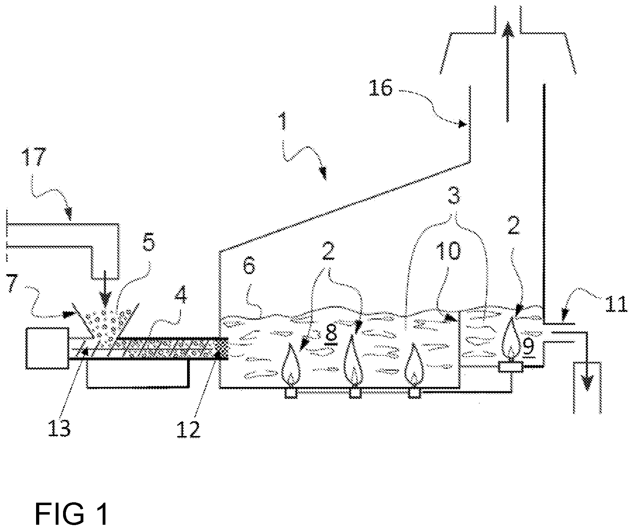

La figure 1 représente schématiquement un four à brûleurs immergés utilisable dans le cadre de l'invention, vu en coupe et de côté. On distingue un four 1 comprenant des brûleurs immergés 2 dans des matières vitrifiables 3 en cours de fusion. Une vis sans fin 13 pousse un mélange 5 de matière première et de biomasse sous la surface 6 de la matière en fusion dans le four. Un distributeur 17 du mélange alimente une trémie d'alimentation 7, laquelle alimente ensuite une vis sans fin 13 tournant dans un fourreau 4. Un bouchon 12, plus ou moins consistant, mélange de matière figée et de matière première, tend à se former à l'extrémité du fourreau 4, à l'approche de la température de la masse en fusion. L'intérieur du four comprend deux cuves 8 et 9 fonctionnant sur le principe enseigné dans \A/02013186480. La vis sans fin alimente d'abord la cuve 8 à relativement basse température, puis la matière vitrifiable fondue formée déborde au-dessus de la cloison 10 pour passer dans la cuve 9 dont la température est plus élevée que celle de la cuve 8. La matière vitrifiable formée sort par la sortie 11 sous le niveau des matières en fusion. Les gaz de combustion s'échappent par une cheminée 16.

## Revendications

1. Mélange de biomasse et de matière première vitrifiable pour introduire dans un four de fusion d'une matière minérale vitrifiable, **caractérisé en ce que** la biomasse comprend des graines oléagineuses et/ou enveloppes de graines oléagineuses, dite biomasse oléagineuse, et **en ce que** la biomasse représente 1 à 50 % en poids et de préférence 10 à 40% en poids de la masse du mélange.

2. Mélange selon la revendication précédente, **caractérisé en ce que** la biomasse oléagineuse représente plus de 50% et de préférence plus de 80% et de préférence plus de 90%, voire 100% en poids de la biomasse.

3. Mélange selon l'une des deux revendications précédentes, **caractérisé en ce que** la biomasse oléagineuse est de la graine ou enveloppe d'au moins une espèce végétale suivante : tournesol, colza, soja, palme, arachide, olives, courge, notamment de la cosse de tournesol.

4. Mélange selon l'une des revendications précédentes, **caractérisé en ce que** la matière première vitrifiable comprend de la silice et au moins un des composés suivant : oxyde ou hydroxyde ou carbonate d'alcalin, oxyde ou hydroxyde ou carbonate d'alcalino-terreux.

5. Procédé de fusion d'une matière minérale vitrifiable comprenant l'introduction d'un mélange préconstitué de l'une des revendications précédentes, dans un four à combustion de combustible, puis le chauffage dudit mélange menant à la fusion de la matière minérale vitrifiable, notamment du verre ou de la roche ou un silicate.

6. Procédé selon la revendication précédente, **caractérisé en ce que** le four est à combustion immergée.

7. Procédé selon l'une des revendications précédentes de procédé, **caractérisé en ce que** le mélange préconstitué est introduit dans le four sous la surface des matières en cours de fusion.

8. Procédé selon l'une des revendications précédentes de procédé, **caractérisé en ce que** le mélange préconstitué est introduit dans le four par écoulement ou poussée.

9. Procédé selon la revendication précédente, **caractérisé en ce que** l'introduction du mélange préconstitué est réalisée par poussée par une vis-sans-fin.

10. Procédé selon l'une des revendications précédentes de procédé, **caractérisé en ce que** la biomasse apporte 5 à 80% du pouvoir calorifique inférieur du combustible.

11. Procédé selon l'une des revendications précédentes de procédé, **caractérisé en ce que** la matière en fusion dans le four a une température comprise entre 1200 et 1700°C.

12. Procédé selon l'une des revendications précédentes de procédé, **caractérisé en ce que** la matière minérale vitrifiable est extraite du four et transformé en fibre dans un dispositif de fibrage.

13. Procédé selon l'une des revendications précédentes de procédé, **caractérisé en ce que** le four comprend des parois refroidies par un courant d'eau.

14. Utilisation d'une biomasse oléagineuse en addition avec de la matière première vitrifiable dans le but de réduire l'endommagement de l'équipement de dosage et de transport de ladite matière première vitrifiable.

## Patentansprüche

1. Mischung aus Biomasse und verglasbarem Rohmaterial zum Einbringen eines verglasbaren mineralischen Materials in einen Schmelzofen,
**dadurch gekennzeichnet, dass** die Biomasse Ölsaat und/oder Ölsaathülsen, die so genannte ölhaltige Biomasse, umfasst und dass die Biomasse 1 bis 50 Gew.-% und vorzugsweise 10 bis 40 Gew.-% der Masse der Mischung ausmacht.

2. Mischung nach dem vorstehenden Anspruch,
**dadurch gekennzeichnet, dass** die ölhaltige Biomasse mehr als 50 Gew.-% und vorzugsweise mehr als 80 Gew.-% und vorzugsweise mehr als 90 Gew.-% oder sogar 100 Gew.-% der Biomasse ausmacht.

3. Mischung nach einem der beiden vorstehenden Ansprüche,
**dadurch gekennzeichnet, dass** die ölhaltige Biomasse die Saat oder die Hülse mindestens einer der folgenden Pflanzenarten ist: Sonnenblume, Raps, Soja, Palme, Erdnuss, Oliven, Kürbis, insbesondere die Hülse von Sonnenblumen.

4. Mischung nach einem der vorstehenden Ansprüche,
**dadurch gekennzeichnet, dass** das verglasbare Rohmaterial Kieselsäure und mindestens eine der folgenden Verbindungen umfasst: Alkalioxid oder -hydroxid oder -carbonat, Erdalkalioxid oder -hydroxid oder -carbonat.

5. Verfahren zum Schmelzen eines verglasbaren mineralischen Materials, umfassend das Einbringen einer vorkonfektionierten Mischung nach einem der vorstehenden Ansprüche in einen Brennstoffverbrennungsofen und das anschließende Erhitzen der Mischung, was zum Schmelzen des verglasbaren mineralischen Materials, insbesondere Glas oder Gestein oder Silikat, führt.

6. Verfahren nach dem vorstehenden Anspruch,
**dadurch gekennzeichnet, dass** der Ofen mit Tauchverbrennung arbeitet.

7. Verfahren nach einem der vorstehenden Verfahrensansprüche,
**dadurch gekennzeichnet, dass** die vorkonfektionierte Mischung unterhalb der Oberfläche der schmelzenden Materialien in den Ofen eingebracht wird.

8. Verfahren nach einem der vorstehenden Verfahrensansprüche,
**dadurch gekennzeichnet, dass** die vorkonfektionierte Mischung durch Fließen oder Schieben in den Ofen eingebracht wird.

9. Verfahren nach dem vorstehenden Anspruch,
**dadurch gekennzeichnet, dass** das Einbringen der vorkonfektionierten Mischung durch Schieben mittels einer Endlosschnecke erfolgt.

10. Verfahren nach einem der vorstehenden Verfahrensansprüche,
**dadurch gekennzeichnet, dass** die Biomasse 5 bis 80 % des unteren Heizwerts des Brennstoffs liefert.

11. Verfahren nach einem der vorstehenden Verfahrensansprüche,
**dadurch gekennzeichnet, dass** das im Ofen schmelzende Material eine Temperatur im Bereich zwischen 1200 und 1700 °C aufweist.

12. Verfahren nach einem der vorstehenden Verfahrensansprüche,
**dadurch gekennzeichnet, dass** das verglasbare mineralische Material aus dem Ofen entnommen und in einer Zerfaserungsvorrichtung in Fasern umgewandelt wird.

13. Verfahren nach einem der vorstehenden Verfahrensansprüche,
**dadurch gekennzeichnet, dass** der Ofen Wände umfasst, die mit einer Wasserströmung gekühlt werden.

14. Verwendung einer ölhaltigen Biomasse zusätzlich zu dem verglasbaren Rohmaterial mit dem Ziel, eine Beschädigung der Dosier- und Transportausrüstung des verglasbaren Rohmaterials zu reduzieren.

## Claims

1. A mixture of biomass and vitrifiable raw material for introducing into a furnace for the melting of a vitrifiable inorganic material, **characterized in that** the biomass comprises oleaginous seeds and/or seed husks of oleaginous seeds, called oleaginous biomass, and **in that** the biomass represents from 1% to 50% by weight and preferably from 10% to 40% by weight of the mass of the mixture.

2. The mixture as claimed in the preceding claim, **characterized in that** the oleaginous biomass represents more than 50% and preferably more than 80% and preferably more than 90%, indeed even 100%, by weight of the biomass.

3. The mixture as claimed in either of the two preceding claims, **characterized in that** the oleaginous biomass is seeds or seed husks of at least one following plant species: sunflower, rapeseed, soybean, palm, peanut, olive or squash, in particular sunflower hulls.

4. The mixture as claimed in one of the preceding claims, **characterized in that** the vitrifiable raw material comprises silica and at least one of the following compounds: alkali metal oxide or hydroxide or carbonate, alkaline earth oxide or hydroxide or carbonate.

5. A process for the melting of a vitrifiable inorganic material comprising the introduction of a preconstituted mixture of one of the preceding claims into a fuel combustion furnace, then the heating of said mixture leading to the melting of the vitrifiable inorganic material, in particular glass or rock or a silicate.

6. The process as claimed in the preceding claim, **characterized in that** the furnace is a submerged combustion furnace.

7. The process as claimed in either of the preceding process claims, **characterized in that** the preconstituted mixture is introduced into the furnace under the surface of the materials being melted.

8. The process as claimed in one of the preceding process claims, **characterized in that** the preconstituted mixture is introduced into the furnace by flow or pushing.

9. The process as claimed in the preceding claim, **characterized in that** the introduction of the preconstituted mixture is carried out by pushing by an endless screw.

10. The process as claimed in one of the preceding process claims, **characterized in that** the biomass provides from 5% to 80% of the net calorific value of the fuel.

11. The process as claimed in one of the preceding process claims, **characterized in that** the molten material in the furnace has a temperature of between 1200°C and 1700°C.

12. The process as claimed in one of the preceding process claims, **characterized in that** the vitrifiable inorganic material is extracted from the furnace and transformed into fiber in a fiberizing device.

13. The process as claimed in one of the preceding process claims, **characterized in that** the furnace comprises walls cooled by a stream of water.

14. The use of an oleaginous biomass in addition with vitrifiable raw material for the purpose of reducing the damage to the equipment for metering and transporting said vitrifiable raw material.
